# EUROPEAN PATENT APPLICATION

(11) **EP 4 604 410 A1**
(43) Date of publication of application: **20.08.2025**
(21) Application number: 23877665.2
(22) Date of filing: 11.10.2023
(51) Int. Cl.: H04B 7/0408, H04B 7/06, H04B 7/08, H04B 17/318, H04B 17/373, H04W 72/23, G06N 5/04, G06N 20/00

(54) **METHOD AND APPARATUS FOR MONITORING MODEL IN BEAM MANAGEMENT BY USING ARTIFICIAL INTELLIGENCE AND MACHINE LEARNING**

(30) Priority: 11.10.2022 KR 20220129855; 10.10.2023 KR 20230134641
(71) Applicant: KT Corporation, Seongnam-si, Gyeonggi-do 13606 (KR)
(72) Inventor: LEE, Eun Jong, Seongnam-si Gyeonggi-do 13606 (KR)
(74) Representative: Brevalex
(86) International application number: PCT/KR2023/015623
(87) International publication number: WO 2024/080740

(57) **Abstract**

Provided are a method and apparatus for monitoring a model in beam management by using artificial intelligence and machine learning. The method may include: in relation to a reference signal configured for a terminal, receiving second reference signal resource set configuration information of the reference signal for monitoring an AI/ML model; on the basis of the second reference signal resource set configuration information, measuring signal strength or signal quality for the reference signal; and reporting the performance result of the AI/ML model by comparing a measured value of the reference signal with a predicted value of the reference signal inferred via the AI/ML model.

## Description

### Technical Field

The disclosure relates to a method and device for monitoring a model in beam management using artificial intelligence and machine learning in a next-generation radio access network (hereinafter, "new radio (NR)").

### Background Art

Recently, the 3rd generation partnership project (3GPP) has approved the "Study on New Radio Access Technology", which is a study item for research on next-generation/5G radio access technology(hereinafter, referred to as "new radio" or "NR"). On the basis of the Study on New Radio Access Technology, Radio Access Network Working Group 1 (RAN WG1) has been discussing frame structures, channel coding and modulation, waveforms, multiple access methods, and the like for the new radio (NR). It is required to design the NR not only to provide an improved data transmission rate as compared with the long term evolution (LTE)/LTE-Advanced, but also to meet various requirements in detailed and specific usage scenarios.

An enhanced mobile broadband (eMBB), massive machine-type communication (mMTC), and ultra reliable and low latency communication (URLLC) are proposed as representative usage scenarios of the NR. In order to meet the requirements of the individual scenarios, it is required to design the NR to have flexible frame structures, compared with the LTE/LTE-Advanced.

Because the requirements for data rates, latency, reliability, coverage, etc. are different from each other, there is a need for a method for efficiently multiplexing a radio resource unit based on different numerologies from other (e.g., subcarrier spacing, subframe, Transmission Time Interval (TTI), etc.) as a method for efficiently satisfying each usage scenario requirement through a frequency band constituting any NR system.

As part of the aspect, artificial intelligence and machine learning technologies are being introduced into the wireless communications field, thereby necessitating a specific architecture that supports effective management and deployment of the AI/ML model.

### Detailed Description of the Invention

### Technical Problem

The disclosure may provide a method and device for model monitoring in beam management using artificial intelligence and machine learning in NR.

### Technical Solution

In an aspect, the disclosure may provide a method for a user equipment (UE) to perform model monitoring in beam management using artificial intelligence and machine learning (AI/ML). The method may include receiving second reference signal resource set configuration information about a reference signal (RS) for monitoring an AI/ML model in relation to the reference signal (RS) configured for the UE, measuring a signal strength or signal quality for the reference signal based on the second reference signal resource configuration information, and comparing a measurement value of the reference signal with a prediction value of the reference signal inferred through the AI/ML model to report a performance result of the AI/ML model.

In another aspect, the disclosure may provide a method for a base station to perform model monitoring in beam management using artificial intelligence and machine learning. The method may include transmitting second reference signal resource set configuration information about a reference signal (RS) for monitoring an AI/ML model in relation to the reference signal (RS) configured for a UE, transmitting the reference signal based on the second reference signal resource configuration information, and receiving a performance result of the AI/ML model obtained by comparing a measurement value of the reference signal with a prediction value of the reference signal inferred through the AI/ML model.

In another aspect, the disclosure may provide a user equipment (UE) performing model monitoring in beam management using artificial intelligence and machine learning (AI/ML). The user equipment may include a transmitter, a receiver, and a controller controlling an operation of the transmitter and the receiver, wherein the controller receives second reference signal resource set configuration information about a reference signal (RS) for monitoring an AI/ML model in relation to the reference signal (RS) configured for the UE, measures a signal strength or signal quality for the reference signal based on the second reference signal resource configuration information, and compares a measurement value of the reference signal with a prediction value of the reference signal inferred through the AI/ML model to report a performance result of the AI/ML model.

In another aspect, the disclosure may provide a base station performing model monitoring in beam management using artificial intelligence and machine learning. The base station may include a transmitter, a receiver, and a controller configured to control an operation of the transmitter and the receiver, wherein the controller transmits second reference signal resource set configuration information about a reference signal (RS) for monitoring an AI/ML model in relation to the reference signal (RS) configured for a UE, transmits the reference signal based on the second reference signal resource configuration information, and receives a performance result of the AI/ML model obtained by comparing a measurement value of the reference signal with a prediction value of the reference signal inferred through the AI/ML model.

### Advantageous Effects

According to the embodiments, a model in beam management may be monitored using artificial intelligence and machine learning in NR.

According to the embodiments, an AI/ML model may be monitored while minimizing disconnections from a cell through continuous model monitoring and reducing the burden of additional beam management in AI/ML model monitoring.

### Brief Description of Drawings

FIG. 1 is a view schematically illustrating an NR wireless communication system in accordance with embodiments of the present disclosure.
FIG. 2 is a view schematically illustrating a frame structure in an NR system in accordance with embodiments of the present disclosure.
FIG. 3 is a view for explaining resource grids supported by a radio access technology in accordance with embodiments of the present disclosure.
FIG. 4 is a view for explaining bandwidth parts supported by a radio access technology in accordance with embodiments of the present disclosure.
FIG. 5 is a view illustrating an example of a synchronization signal block in a radio access technology in accordance with embodiments of the present disclosure.
FIG. 6 is a signal diagram for explaining a random access procedure in a radio access technology in accordance with embodiments of the present disclosure.
FIG. 7 is a view for explaining CORESET.
FIG. 8 is a view illustrating an operation in which two UEs perform initial beam management at two different positions during a beam transmission operation by a base station.
FIG. 9 is a diagram illustrating an initial access procedure of a UE and a base station.
FIGS. 10 and 11 are views illustrating setting a candidate beam allocated to a UE.
FIG. 12 is a view illustrating a procedure for beam management.
FIGS. 13 to 15 are signal flow diagrams illustrating a beam reporting method according to a reporting method.
FIG. 16 is a flowchart illustrating a method of a UE to perform model monitoring in beam management using artificial intelligence and machine learning according to an embodiment.
FIG. 17 is a flowchart illustrating a method of a base station to perform model monitoring in beam management using artificial intelligence and machine learning according to an embodiment.
FIGS. 18 and 19 are views illustrating an operation of performing beam measurement and beam prediction using AI/ML according to an embodiment.
FIG. 20 is a signal flow diagram illustrating operations of a UE and a base station when the UE performs model inference according to an embodiment.
FIG. 21 is a signal flow diagram illustrating operations of a UE and a base station when the base station performs model inference according to an embodiment.
FIG. 22 is a block diagram, illustrating a UE according to an embodiment.
FIG. 23 is a block diagram illustrating a base station according to an embodiment.

### Mode for Carrying out the Invention

Hereinafter, some embodiments of the present disclosure will be described in detail with reference to the accompanying illustrative drawings. In the drawings, like reference numerals are used to denote like elements throughout the drawings, even if they are shown on different drawings. Further, in the following description of the present disclosure, a detailed description of known functions and configurations incorporated herein will be omitted when it may make the subject matter of the present disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the present disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, WiFi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports high-speed mobility.

In order to satisfy such scenarios, NR introduces a wireless communication system employing a new waveform and frame structure technology, a low-latency technology, a super-high frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

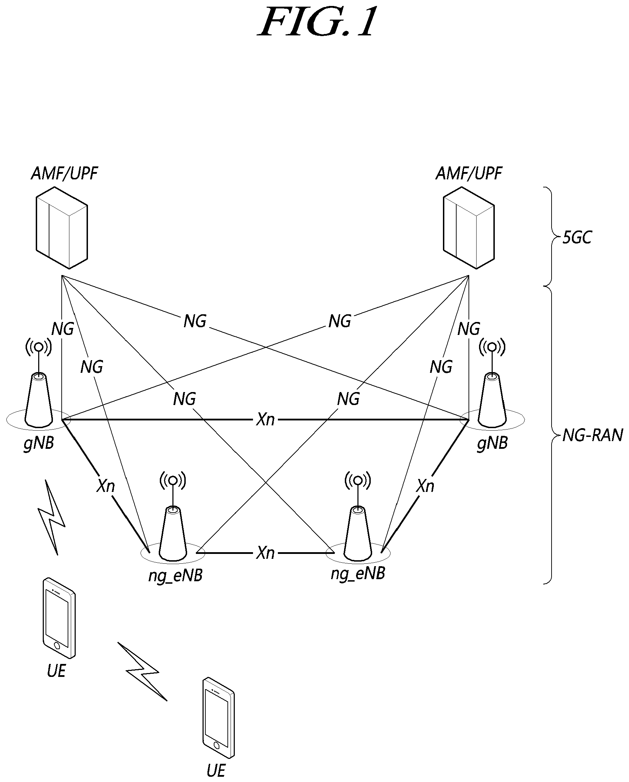

FIG. 1 is a view schematically illustrating an NR system to which the present embodiment is applicable.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

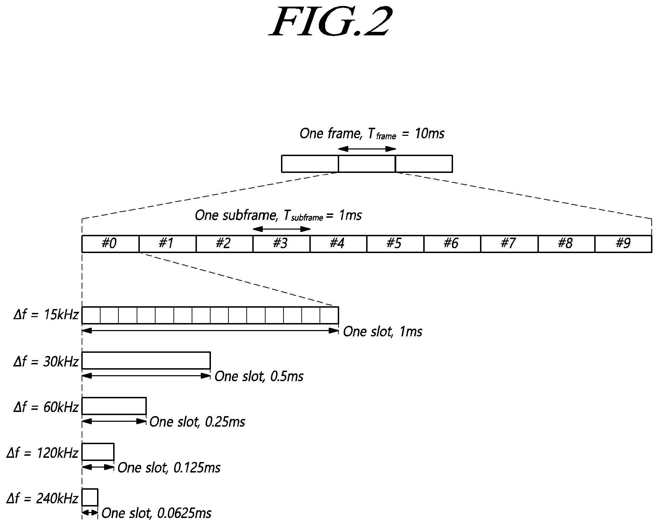

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system to which the present embodiment may be applied. Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

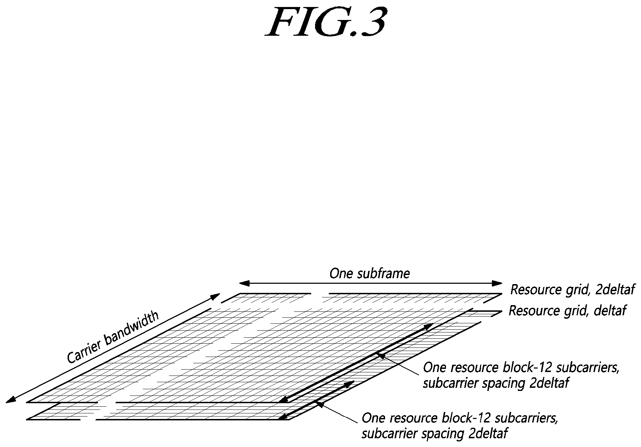

FIG. 3 illustrates resource grids supported by a radio access technology in accordance with embodiments of the present disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

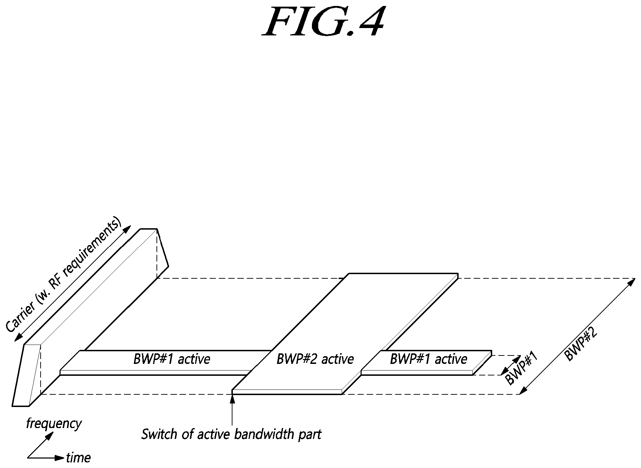

FIG. 4 illustrates bandwidth parts supported by a radio access technology in accordance with embodiments of the present disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

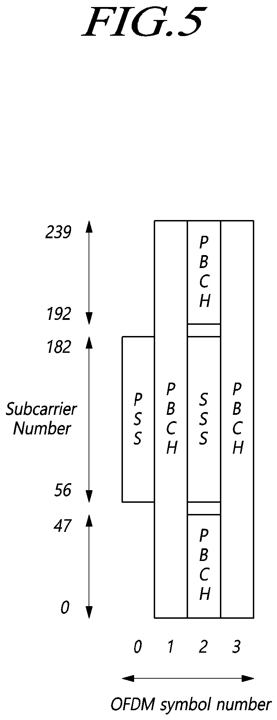

FIG. 5 illustrates an example of a synchronization signal block in a radio access technology in accordance with embodiments of the present disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB1 numerology information is also applied to some messages used in the random access procedure for the UE to access the base station after completing the cell search procedure. For example, the numerology information of SIB1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB1 is periodically transmitted over a PDSCH. In order to receive SIB1, the UE must receive numerology information used for the SIB1 transmission and the CORESET (control resource set) information used for scheduling of SIB1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

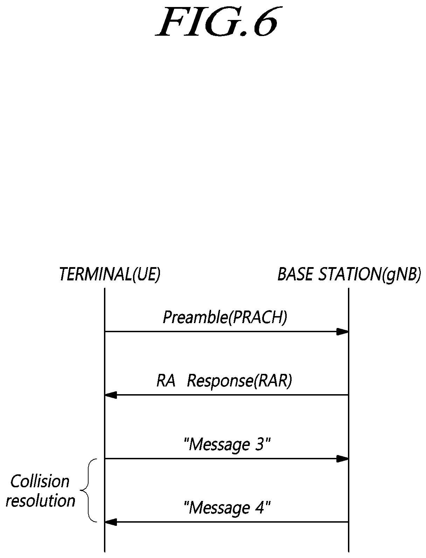

FIG. 6 is a view for explaining a random access procedure in a radio access technology to which the present embodiment is applicable.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

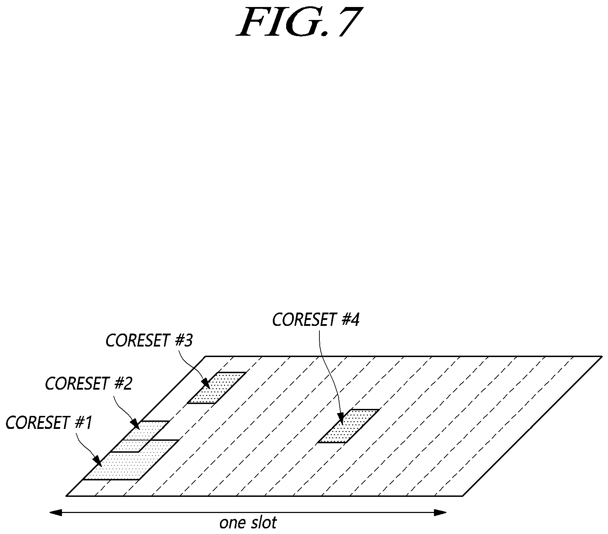

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as meanings used at present or in the past or as various meanings to be used in the future.

### Wider bandwidth operations

The typical LTE system supports scalable bandwidth operations for any LTE CC (component carrier). That is, according to a frequency deployment scenario, an LTE provider may configure a bandwidth of a minimum of 1.4 MHz to a maximum of 20 MHz in configuring a single LTE CC, and a normal LTE UE supports a transmission/reception capability of a bandwidth of 20 MHz for a single LTE CC (e.g., per component carrier).

However, NR is designed to support UEs with different transmission/reception bandwidth capabilities over a single wideband NR CC. Accordingly, it is required to configure one or more bandwidth parts (BWPs) including subdivided bandwidths for an NR CC, thereby supporting more flexible and broader bandwidth operation through configuration and activation of different bandwidth parts for respective UEs.

Specifically, one or more bandwidth parts may be configured through a single serving cell configured for a UE in NR, and the UE is defined to activate one downlink (DL) bandwidth part and one uplink (UL) bandwidth part for uplink/downlink data transmission/reception in the corresponding serving cell. In addition, in the case where a plurality of serving cells is configured for the UE (i.e., the UE to which CA is applied), the UE is also defined to activate one downlink bandwidth part and/or one uplink bandwidth part in each serving cell to perform uplink and/or downlink data transmission and reception using the radio resources of the corresponding serving cell.

Specifically, an initial bandwidth part for an initial access procedure of a UE may be defined in a serving cell; one or more UE-specific bandwidth parts may be configured for each UE through dedicated RRC signaling, and a default bandwidth part for a fallback operation may be defined for each UE.

It is possible to define the simultaneous activation and use of a plurality of downlink and/or uplink bandwidth parts according to the capability of the UE and the configuration of the bandwidth parts in a serving cell. However, NR rel-15 defined activation and use of only one downlink (DL) bandwidth part and one uplink (UL) bandwidth part at a time.

The disclosure relates to determining a beam for model monitoring and defining a new reference signal (RS) resource related thereto as a method for measuring the accuracy of deployed AI/ML for a UE capable of performing beam management using AI/ML.

### Beam management in 3GPP NR

The beam management method of the 3GPP NR may be divided into an initial access stage and a post-cell connection establishment stage. The UE performing the initial access procedure configures the initial Tx/Rx beam of the UE through the RACH procedure. To provide gNB tx.beam (e.g., gNB transmit beam) configuration to the UE without cell connection, the base station periodically and repeatedly transmits the SSBs mapped with beams in different directions (e.g., SSBs are transmitted every 20ms period within 5ms by default). The UE may select the qualified SSB through signal measurement for the periodically transmitted SSBs and notify the base station of information about the selected tx beam by transmitting the PRACH preamble mapped for the SSB.

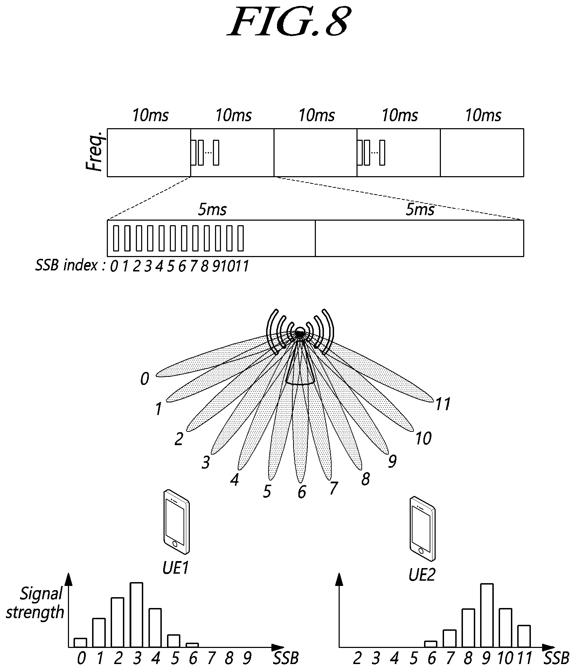

FIG. 8 is a view illustrating an operation in which two UEs perform initial beam management at two different positions during a beam transmission operation by a base station.

Referring to FIG. 8, the base station may transmit the synchronization signal block SSB using specific time frequency resources in a preset frame. In this case, the base station may perform a beam sweeping operation by forming various beams.

For example, the beams may be transmitted by being spatially divided from the beam indexes 0 to 11. If UE 1 performs a measurement on the SSB, the signal strength for beam index number 3, which matches the beam direction, is the largest, while the strength is measured as low for the surrounding beams, as illustrated in FIG. 8. Likewise, UE 2 may measure the signal strength for beam index number 9 by positional characteristics. Each UE may perform an initial access to the base station by performing a random access procedure based on the signal strength measurement result for the SSB.

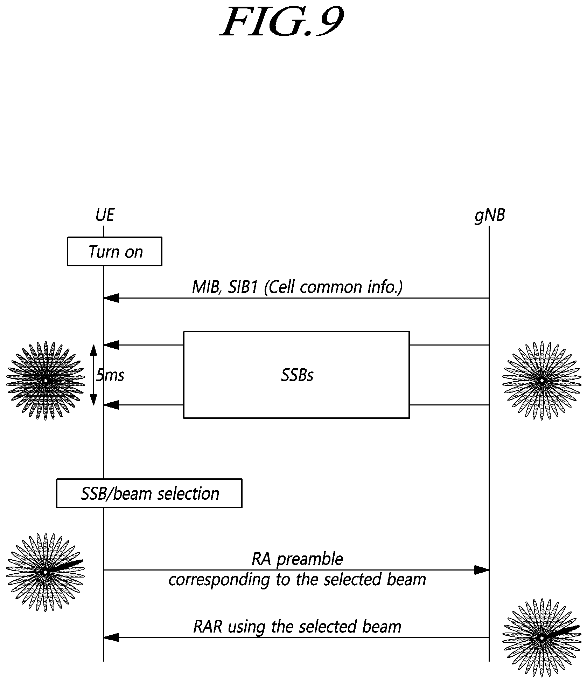

FIG. 9 is an example view illustrating an initial access procedure of a UE and a base station.

Referring to FIG. 9, the initial access procedure performed by a UE in NR proceeds as follows.
1. The UE receives cell-related parameter information (e.g., PRACH information corresponding to each SSB) required for the initial connection step through the system information message.
2. The UE measures the RSRP for the periodically transmitted SSB.
3. The UE performs beam (SSB) selection based on the measurement result of the SSB. For example, the UE may select the beam exhibiting the highest RSRP based on the measurement result.
4. The UE may notify the base station of the selected initial beam information by transmitting the preamble belonging to the PRACH resource corresponding to the selected beam to the base station.
5. The UE may receive a random access response to the transmitted random access preamble through the selected beam. Thereafter, access to the initial cell may be performed through transmission/reception of Msg 3 and Msg 4.

As described above, the base station that does not know the position/beam information about the UE that first entered (i.e., a UE that performs a contention-based random access procedure (CBRA)) may commonly at the cell level set up to 64 beams for a beam setting of a UE with no connection. The UE performs an operation of sequentially measuring all beams to discover the optimal beams at its position. As the number of beams in the cell increases, a time delay may occur in beam selection and cell connection, and the UE may be required to measure more beams, which may increase the power consumption of the UE.

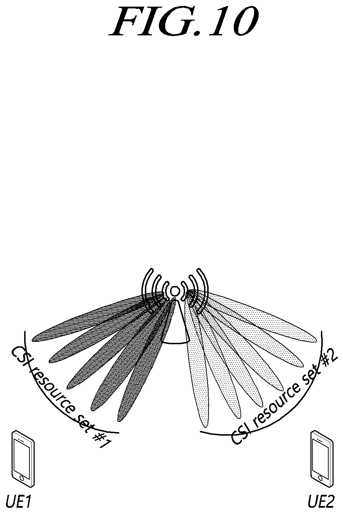

To address the foregoing issues, the base station may estimate the approximate position/beam of the initially accessing UE by mapping a wider beam for the SSB and, after the UE accesses the cell, may set a narrow beam through a beam refinement operation. However, while the narrow beam provides a high data rate to the UE, it is sensitive to the movement of the UE or environmental changes, making disconnections more likely. To that end, the base station allocates the CSI resource (CSI-RS/SSB) to which the candidate beam is mapped to the UE in a UE-specific manner as illustrated in FIG. 10, so that the UE continuously measures the ambient beam strength and reports the measurement result to the base station. This may be set by the base station through a CSI resource configuration and a CSI report configuration.

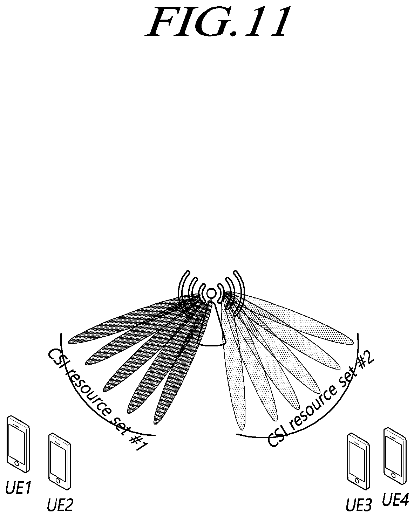

The UE configured with the beam report performs reporting based on the configuration of the base station through the measurement of the reference signal (RS) allocated to the UE. It follows the CSI framework defined by 3GPP. However, the UE-specific CSI configuration method has a problem in that, as the number of UEs in the cell increases, the RS resources allocated per UE also increase rapidly. To alleviate the resource overhead problem, the base station may choose a method of allocating the same candidate beam (CSI resource) to UEs at similar positions, as illustrated in FIG. 11 (UE group-specific CSI resource configuration). However, if UEs with different mobility share the same resource, a problem arise where a new candidate beam resource should be allocated to UEs outside the resource area arises. If a UE with high/medium mobility is assigned minimum candidate beams as a way to reduce resource overhead, the UE experiences frequent RRC reconfiguration, and candidate beam reconfiguration through RRC causes a relatively large delay, which may cause beam disconnection. The base station may operate the candidate beam by appropriately increasing the number of beams belonging to the CSI resource to alleviate such an issue. However, a trade-off issue occurs in which from a UE perspective, the measurement burden increases due to the increased number of beams.

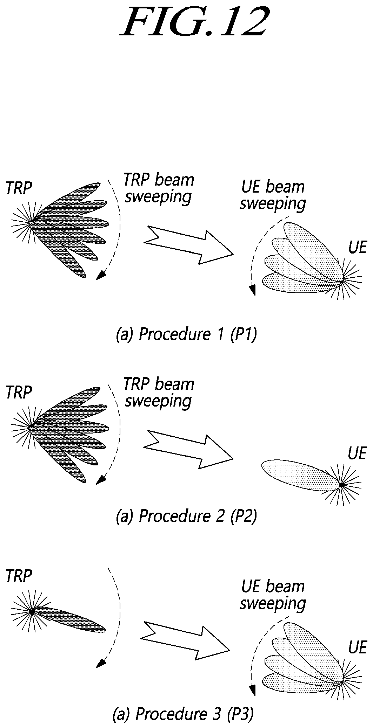

Currently in NR, beam management is generally categorized into three (P1, P2, and P3) in terms of the physical layer. Referring to FIG. 12, P1 refers to an operation of discovering a transmission/reception (tx/rx) beam pair while simultaneously performing UE beam sweeping and transmission/reception point (TRP) beam sweeping , similar to the beam configuration performed during the initial access procedure. The UE entering the connected mode identifies the beams, set via the CSI resource set configuration by the base station are to be swept, and performs signal strength measurements on the TRP beam. If the TRP beam of the UE is selected through P2, the base station continuously transmits the selected beam through P3. The UE may select a UE beam while conducting UE beam sweeping. The specific beam selection at this point is implementation dependent. This operation may be applicable to both DL/UL.

Beam sweeping uses a method for implicitly indicating the beam information by mapping it to RS resource information, where the base station informs the UE of the reference signal resource information through a specific candidate beam (CSI resource set) setting. In other words, the base station is able to identify the beam information it has mapped through index information implicitly associated with the RS using the RS resource indicator (RI), rather than informing the UE of the actual beam index. This is configured using the 3GPP CSI framework, and the UE implicitly reports RSRP information about four optimal beams RI to the base station by measuring the strength of RS for the resource configured by the base station.

The method for reporting this information also follows the RRC configuration of the base station and is defined to be configured as one of three methods: periodic reporting, aperiodic reporting, and semi-persistent reporting.

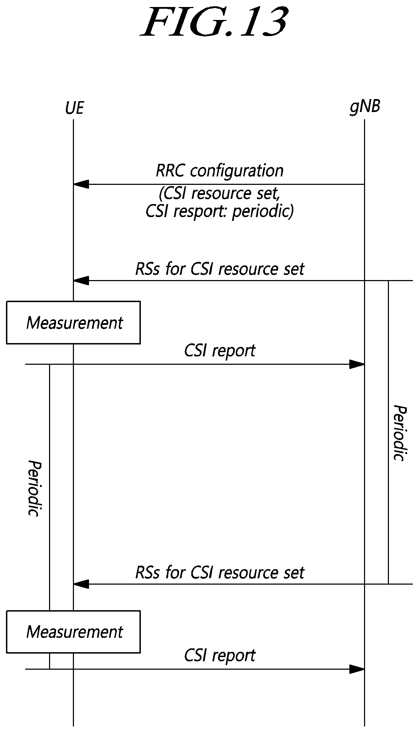

As illustrated in FIG. 13, the periodic CSI reporting method is triggered through the RRC configuration. The UE receiving the configuration for the CSI-related RS resource and reporting method through an RRC message measures the signal strength for the beam through periodically received RS according to the configuration and repeatedly reports the measured result.

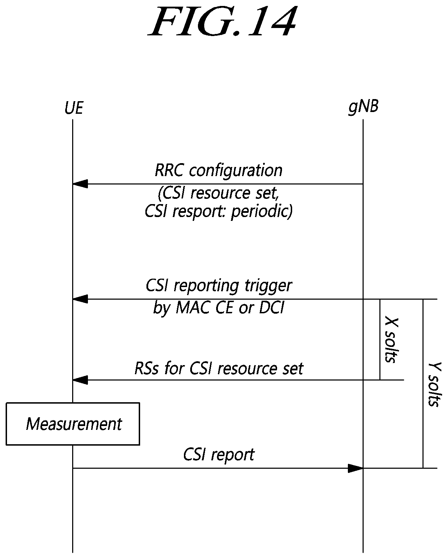

In FIG. 14, although the CSI-related RS resource and reporting method is configured through the RRC message in the aperiodic CSI reporting method, no RS-based beam measurement is performed unless a trigger message is received at the lower layer. Only when a trigger indication is received through MAC CE or DCI, the signal strength of the beam is measured through a one-time RS transmission based on the trigger, and the result value is reported once.

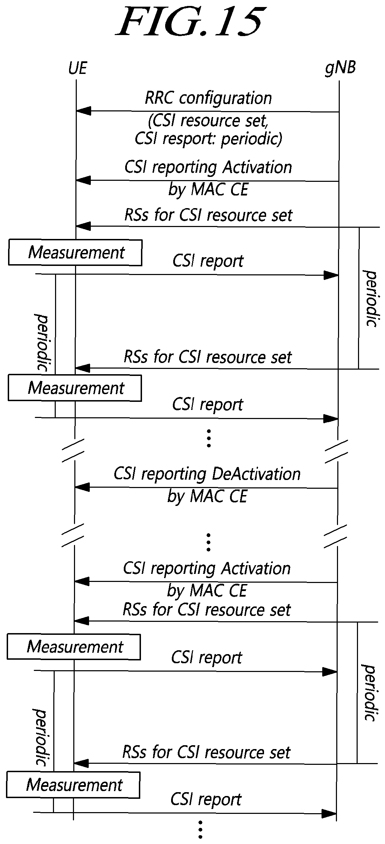

FIG. 15 is a semi-persistent reporting method that is an intermediate method between the aperiodic CSI reporting method and the periodic reporting method, and the UE receiving the configuration for the CSI-related RS resource and reporting method through the RRC message periodically performs CSI reporting until it receives the deactivation message only when activated by the MAC CE. If the UE receives a CSI deactivation message via MAC CE, CSI reporting is stopped.

To mitigate the delay in such beam search (measurement) and UE power consumption, it is considered to apply an AI/ML model. The radio interface may be enhanced with a function that enables improved support for an AI/ML-based algorithm to reduce complexity/overhead.

Key use cases for applying the application of the AI/ML model include the following.
∘ CSI frequency band enhancement, e.g., overhead reduction, enhanced accuracy, and prediction.
∘ Beam management, e.g., temporal and/or spatial domain prediction to reduce overhead and standby time and enhance beam selection accuracy.
∘ Enhance positioning accuracy for various scenarios including scenarios with harsh NLOS conditions.

In the regard, the following terms may be defined for AI/ML-applied wireless communication.

Data collection refers to a process by which a network node, management entity, or UE collects data for the purpose of AI/ML model training, data analysis, and inference.

The AI/ML model refers to a data-driven algorithm that produces outputs from inputs by applying AI/ML technology. AI/ML model training refers to the process of learning input-output relationships from data and producing an AI/ML model ready for inference. AI/ML model inference refers to the process of generating outputs from inputs using a trained AI/ML model. AI/ML model validation refers to a subprocess of training that evaluates the quality of the AI/ML model using data sets different from those used for model training. AI/ML model testing refers to a subprocess of training that evaluates the performance of the final AI/ML model using data sets different from those used for model training and validation. Unlike AI/ML model validation, the testing does not involve any subsequent model adjustments.

The UE-side AI/ML model refers to an AI/ML model in which inference is performed entirely by the UE. The Network-side AI/ML model refers to an AI/ML model in which inference is performed entirely on the network. One-sided AI/ML model refers to a UE-side AI/ML model or a network-side AI/ML model. Two-sided AI/ML model refers to a paired AI/ML model in which joint inference is performed. Here, joint inference refers to AI/ML inference that is collaboratively performed by both the UE and network. In other words, the initial partial inference is performed by the UE, and the remaining inference is carried out by the gNB, or vice versa.

AI/ML model transfer refers to transmitting an AI/ML model over a wireless interface, either as parameters of a known model structure at the receiving side or a new model with the parameters. The transfer may involve either a full model or a partial model. Model download refers to the transferring a model from the network to the UE. Model upload refers to transferring a model from the UE to the network.

Federated learning (or federated training) refers to a machine learning technique in which the AI/ML model is trained across multiple distributed edge nodes (e.g., UE, gNB), each performing local model training using its own local data samples. This technique involves multiple rounds of model interaction without exchanging local data samples. Offline field data refers to data collected in the field and used for offline AI/ML model training. Online field data refers to data collected in the field and used for real-time or online AI/ML model training.

Model monitoring refers to the procedure for monitoring (e.g., evaluating) the inference performance of an AI/ML model.

Supervised learning refers to the process of training a model using inputs paired with corresponding labels. Unsupervised learning refers to a process of training a model without labeled data. Semi-supervised learning refers to the process of training a model using a combination of labeled data and unlabeled data. Reinforcement learning (RL) refers to the process of training the AI/ML model using inputs (i.e., states) and feedback signals (i.e., rewards) based on the model's output (i.e., actions) in an interactive environment.

Model activation refers to activating (e.g., enabling) an AI/ML model to perform a specific function. Model deactivation refers to deactivating (e.g., disabling) an AI/ML model from performing a specific function. Model switching refers to deactivating the currently active AI/ML model and activating another AI/ML model for a specific function.

When applying an AI/ML model, the following network-UE collaboration levels are considered.
1. Level x: No collaboration.
2. Level y: Signaling-based collaboration without model transfer.
3. Level z: Signal-based collaboration with model transmission.

BM-Case1 and BM-Case2 are defined to support characterization and basic performance evaluation for AI/ML-based beam management, as follows.

BM-Case1: downlink (DL) beam prediction in the spatial domain for beam Set (Set A), based on the measurement results of beam Set B.

BM-Case2: downlink DL beam prediction in the temporal domain for beam set A, based on the past measurement results of beam set B.

In this case, for both BM-Case1 and BM-Case2, the beams sets A and B may reside within the same frequency range.

Set A and Set B may be configured differently; for example, Set B may be a subset of Set A, or Set A may include narrower beams while Set B includes wider beams. Here, Set A may be defined for DL beam prediction, and Set B may be defined for DL beam measurement.

Hereinafter, a method of monitoring a model in beam management using artificial intelligence and machine learning is described with reference to the related drawings.

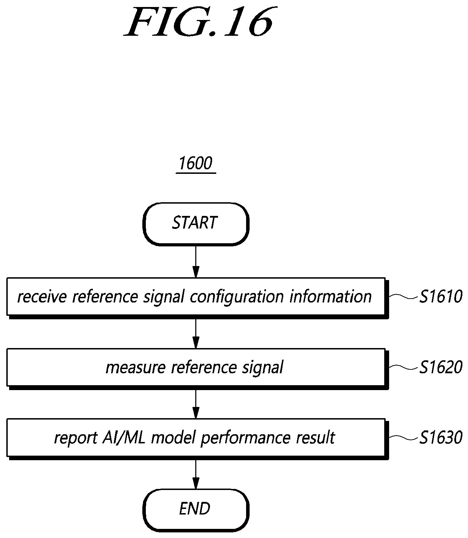

FIG. 16 is a flowchart illustrating a procedure 1600 of a UE to perform model monitoring in beam management using artificial intelligence and machine learning according to an embodiment.

Referring to FIG. 16, the UE may receive second reference signal resource set configuration information on a reference signal (e.g., configuration information for a second reference signal resource set related to an reference signal used for) for monitoring the AI/ML model, based on a reference signal RS configured for the UE (S 1610).

For example, when a reference signal such as CSI-RS is configured for the UE, an entire reference signal resource set (e.g., Set A) for a corresponding reference signal may be configured. In this case, the entire reference signal resource set (e.g., Set A) may represent a set of reference signal resources configured for the UE using a legacy method. Further, each reference signal resource may be associated with a corresponding beam. While CSI-RS is used as an example of a reference signal, the concept is not limited to a specific signal as long as the technical spirit of the disclosure can be similarly applied.

According to an embodiment, for the reference signals respectively transmittable in the reference signal resources in the entire reference signal resource set (Set A), the UE may obtain a prediction value inferred by the AI/ML model, instead of directly measuring the signal strength or signal quality. In this case, the prediction value for the reference signals respectively transmittable in the reference signal resources included in the entire reference signal resource set may be inferred using, as an input, the measurement value of the reference signal measured based on first reference signal resource set (Set B) configuration information about the reference signal, configured based on the entire reference signal resource set. (e.g., In this case, the predicted values for the reference signals in Set A may be inferred using, as input, the measurement values obtained from reference signals configured based on the first reference signal set (Set(B), which is derived from the full Set A.

To that end, the UE may further receive the first reference signal resource set configuration information in addition to the second reference signal resource set configuration information through higher layer signaling. The UE may measure signal strength or signal quality of the reference signal transmitted through the reference signal resource in the first reference signal resource set (Set B) based on the first reference signal resource set configuration information.

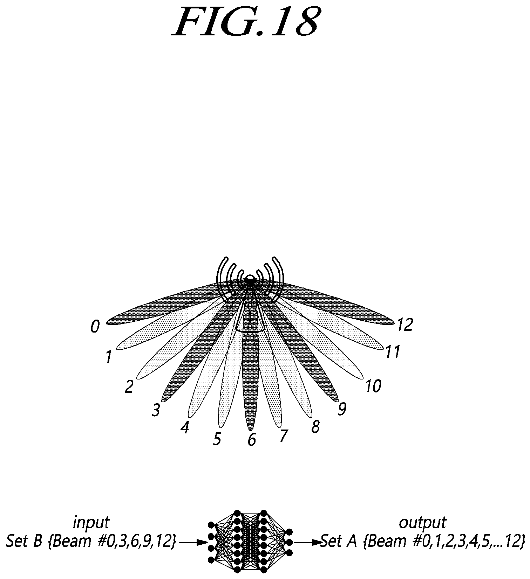

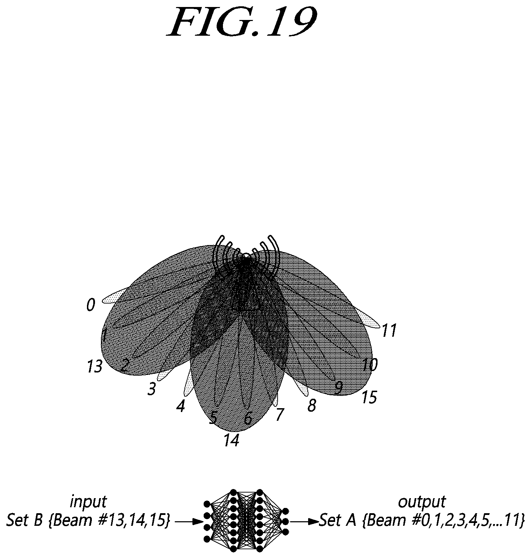

In this case, as illustrated in FIG. 18, the first reference signal resource set (Set B) may be configured as a subset including some of the entire reference signal resource set (Set A). Alternatively, the first reference signal resource set (Set B) may be configured as a separate new reference signal resource different from the entire reference signal resource set (Set A), as illustrated in FIG. 19. In this case, the number of reference signal resources constituting the first reference signal resource set (Set B) is set to be smaller than the number of reference signal resources included in the entire reference signal resource set (Set A).

The UE may obtain prediction values for the reference signals respectively transmittable in the reference signal resources included in the entire reference signal resource set (Set A) using the measurement value of the reference signal measured based on the first reference signal resource set (Set B) configuration information as an input to the AI/ML model (e.g., by inputting measurement values from the first reference signal resource set (Set B) into the AI/ML model). In this case, if the prediction value of the entire reference signal resource set (Set A) may be inferred by using the measurement value of the first reference signal resource set (Set B) as an input, the AI/ML model is not limited to a specific model and may include various models known or to be known later.

The UE may determine (e.g., select) N reference signal resources (Top-N) in order from a reference signal resource where the highest prediction value is inferred among the reference signal resources included in the entire reference signal resource set (Set A) (e.g., descending order of predicted values from among the resources in Set A). Here, N may be preset to a natural number. However, this is merely an example, and the method for determining the N reference signal resources may vary as necessary.

If the UE reports N reference signal resources (Top-N), the base station may determine an optimal beam to be used in subsequent communication with the UE by referring to the reported information. The base station may perform data transmission/reception with the UE using the determined beam.

In this case, the second reference signal resource set (Set C) configuration information (e.g., configuration information for second reference signal resource set (Set C)) may be configured to monitor the AI/ML model used to infer the prediction value for the entire reference signal resource set (Set A). According to an embodiment, the second reference signal resource set configuration information may be configured based on at least one reference signal resource selected according to a prediction value inferred through the AI/ML model for reference signals respectively transmittable in the reference signal resources included in the entire reference signal resource set.

According to an embodiment, if the above-described N reference signal resources (Top-N) are selected, the second reference signal resource set (Set C) may be composed of N reference signal resources. In other words, the beams corresponding to the second reference signal resource set (Set C) may be composed of beams belonging to top-N reported to the base station among the beams of the entire reference signal resource set (Set A). The base station may implicitly map the beams for top-N received from the UE to the reference signal resource previously allocated to the UE through the second reference signal resource set (Set C) configuration information.

Thus, the second reference signal resource set configuration information may be configured whenever at least one reference signal resource selected according to the prediction value for reference signals respectively transmittable in the reference signal resources included in the entire reference signal resource set is reported. In other words, a second reference signal resource set (Set C) may be dynamically configured between the UE and the base station whenever reporting for Top-N is performed.

Further, in the second reference signal resource set configuration information, time domain resource information may be configured with respect to the time of reporting at least one reference signal resource selected according to the prediction value for reference signals respectively transmittable in the reference signal resources included in the entire reference signal resource set or the transmission time of the first reference signal resource set.

In other words, the base station may allocate at least the first reference signal resource set (Set B) and the second reference signal resource set (Set C) for each UE, and configure the second reference signal resource set (Set C) to be transmitted in temporal association with the first reference signal resource set (Set B). For example, the second reference signal resource set (Set C) may be configured to be transmitted, x slots from the CSI reporting time for Top-N inferred based on the measurement value of the first reference signal resource set (Set B). Alternatively, the second reference signal resource set (Set C) may be configured to be transmitted, y slots after the transmission time of the reference signals through the first reference signal resource set (Set B).

Referring back to FIG. 16, the UE may measure the signal strength or signal quality of the reference signal based on the second reference signal resource set configuration information (S 1620), compare the measurement value of the reference signal with the prediction value of the reference signal inferred through the AI/ML model, and report the performance result of the AI/ML model (S 1630).

The UE may measure the signal strength or signal quality of the reference signal transmitted through the second reference signal resource set based on the second reference signal resource set (Set C) configuration information. In this case, the UE may expect the corresponding reference signal to be sequentially/implicitly mapped and transmitted for the beam of the Top-N reported by the UE. In other words, the RIs corresponding to the reference signal resources belonging to the second reference signal resource set (Set C) may be mapped in a pre-agreed order, such as in ascending/descending order of beam id for the reported Top-N or resource indicator (RI), or ascending order/descending order for the reported prediction value.

The UE may determine the accuracy of the model by comparing the measurement value of the reference signal with the prediction value of the reference signal inferred through the AI/ML model. In other words, the UE may determine the accuracy of the model by comparing the measurement value for each beam mapped to the second reference signal resource set (Set C) with the prediction value for each beam corresponding to Top-N derived by the AI/ML model.

The UE may report performance evaluation results, such as accuracy, updates, or reselection of the AI/ML model, to the base station. If the model accuracy is found to be low according to the performance evaluation result, the UE may request a new CSI resource setting (e.g., new CSI resource configuration) by requesting/instructing the base station to deactivate, replace, or fall back from the current AI/ML model.

According to an embodiment, the report of the performance evaluation result may be transmitted or omitted depending on the model monitoring result. For example, if the accuracy of the model meets or exceeds a predetermined value, the reporting may be omitted. Alternatively, the reporting of the performance evaluation result may be configured to occur consistently, regardless of the model monitoring result.

According to the embodiments described above, a model may be monitored in beam management using artificial intelligence and machine learning. Further, the AI/ML model monitoring method and device according to the embodiment may minimize disconnections from a cell through continuous model monitoring and reduce the burden of additional beam management in AI/ML model monitoring.

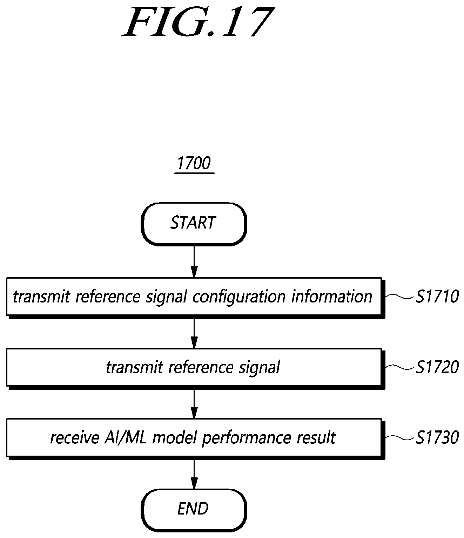

FIG. 17 is a flowchart illustrating a procedure 1700 of a base station to perform model monitoring in beam management using artificial intelligence and machine learning according to an embodiment. The description related to FIG. 16 may be omitted here for brevity, and the omitted content may be similarly applied to the base station, provided it does not contradict the technical spirit of the invention.

Referring to FIG. 17, the base station may transmit second reference signal resource set configuration information (configuration information for second reference signal resource set) about a reference signal for monitoring the AI/ML model in relation to a reference signal RS configured for the UE (S1710).

For example, when a reference signal such as CSI-RS is configured for the UE, the entire reference signal resource set (Set A) for the reference signal may be configured. In this case, the entire reference signal resource set (Set A) may refer to a group of reference signal resources configured for the UE using a legacy method. Further, each reference signal resource may be configured to correspond to an individual beam.

According to an embodiment, for the reference signals respectively transmittable in the reference signal resources in the entire reference signal resource set (Set A), the UE may obtain a prediction value inferred through the AI/ML model instead of the value directly measured for signal strength or signal quality. In this case, the prediction value for the reference signals respectively transmittable in the reference signal resources included in the entire reference signal resource set may be inferred using, as an input, the measurement value of the reference signal measured based on first reference signal resource set (Set B) configuration information about the reference signal, configured based on the entire reference signal resource set.

To that end, the base station may further transmit the first reference signal resource set configuration information in addition to the second reference signal resource set configuration information through higher layer signaling. The UE may measure signal strength or signal quality of the reference signal transmitted through the reference signal resource in the first reference signal resource set (Set B) based on the first reference signal resource set configuration information.

In this case, as illustrated in FIG. 18, the first reference signal resource set (Set B) may be configured as a subset including some of the entire reference signal resource set (Set A). Alternatively, the first reference signal resource set (Set B) may be configured as a separate new reference signal resource different from the entire reference signal resource set (Set A), as illustrated in FIG. 19. In this case, the number of reference signal resources constituting the first reference signal resource set (Set B) is set to be smaller than the number of reference signal resources included in the entire reference signal resource set (Set A).

The UE may obtain a prediction value for reference signals respectively transmittable in the reference signal resources included in the entire reference signal resource set (Set A) using the measurement value of the reference signal measured based on the first reference signal resource set (Set B) configuration information as an input to the AI/ML model.

The UE may determine N reference signal resources (Top-N) in order from the reference signal resources from which the highest prediction value is inferred among the reference signal resources included in the entire reference signal resource set (Set A). Here, N may be preset to a natural number. However, this is merely an example, and the method of determining N reference signal resources may be configured differently as needed.

If the UE reports N reference signal resources (Top-N), the base station may determine an optimal beam to be used in subsequent communication with the UE by referring to the reported information. The base station may perform data transmission/reception with the UE using the determined beam.

In this case, the second reference signal resource set (Set C) configuration information may be configured to monitor the AI/ML model used to infer the prediction value for the entire reference signal resource set (Set A). According to an embodiment, the second reference signal resource set configuration information may be configured based on at least one reference signal resource selected based on a prediction value inferred through the AI/ML model for reference signals respectively transmittable in the reference signal resources included in the entire reference signal resource set.

According to an example, if the above-described N reference signal resources (Top-N) are selected, the second reference signal resource set (Set C) may be composed of N reference signal resources. In other words, the beams corresponding to the second reference signal resource set (Set C) may be composed of beams belonging to top-N reported to the base station among the beams of the entire reference signal resource set (Set A). The base station may implicitly map the beams for top-N received from the UE to the reference signal resource previously allocated to the UE through the second reference signal resource set (Set C) configuration information.

Thus, the second reference signal resource set configuration information may be configured whenever at least one reference signal resource selected according to the prediction value for reference signals respectively transmittable in the reference signal resources included in the entire reference signal resource set is reported. In other words, a second reference signal resource set (Set C) may be dynamically configured between the UE and the base station whenever reporting for Top-N is performed.

Further, in the second reference signal resource set configuration information, time domain resource information may be configured with respect to the time of reporting at least one reference signal resource selected according to the prediction value for reference signals respectively transmittable in the reference signal resources included in the entire reference signal resource set or the transmission time of the first reference signal resource set.

In other words, the base station may allocate at least the first reference signal resource set (Set B) and the second reference signal resource set (Set C) for each UE, and configure the second reference signal resource set (Set C) to be transmitted in temporal association with the first reference signal resource set (Set B). For example, the second reference signal resource set (Set C) may be configured to be transmitted, x slots from the CSI reporting time for Top-N inferred based on the measurement value of the first reference signal resource set (Set B). Alternatively, the second reference signal resource set (Set C) may be configured to be transmitted, y slots after the transmission time of the reference signals through the first reference signal resource set (Set B).

Referring back to FIG. 17, the base station may transmit a reference signal based on the second reference signal resource set configuration information (S1720) and receive the performance result of the AI/ML model obtained by comparing the measurement value of the reference signal with the prediction value of the reference signal inferred through the AI/ML model (S1730).

The UE may measure the signal strength or signal quality of the reference signal transmitted through the second reference signal resource set based on the second reference signal resource set (Set C) configuration information. In this case, the UE may expect the corresponding reference signal to be sequentially/implicitly mapped and transmitted for the beam of the Top-N reported by the UE. In other words, the base station may map the RIs corresponding to the reference signal resources belonging to the second reference signal resource set (Set C) in a pre-agreed order, such as in ascending/descending order of beam id for the reported Top-N or resource indicator (RI), or ascending order/descending order for the reported prediction value.

The UE may determine the accuracy of the model by comparing the measurement value of the reference signal with the prediction value of the reference signal inferred through the AI/ML model. In other words, the UE may determine the accuracy of the model by comparing the measurement value for each beam mapped to the second reference signal resource set (Set C) with the prediction value for each beam corresponding to Top-N derived by the AI/ML model.

The base station may receive, from the UE, a performance evaluation result, such as accuracy, update, or reselection of the AI/ML model. When the model accuracy is determined to be low based on the performance evaluation result, the base station may receive, from the UE, a request for a new CSI resource setting (e.g., new CSI resource configuration) by requesting/instructing the base station to deactivate, replace, or fall back the AI/ML model.

According to an embodiment, the report of the performance evaluation result may be transmitted or omitted according to the model monitoring result. For example, when the accuracy of the model meets or exceeds a predetermined value as a result of performance evaluation, the reporting may be omitted. Alternatively, the reporting of the performance evaluation result may be configured to be performed every time regardless of the model monitoring result.

According to the embodiments described above, a model may be monitored in beam management using artificial intelligence and machine learning. Further, the AI/ML model monitoring method and device according to an embodiment may minimize disconnections from a cell through continuous model monitoring and reduce the burden of additional beam management in AI/ML model monitoring.

Hereinafter, each embodiment related to the model monitoring method in beam management using artificial intelligence and machine learning is described in detail with reference to the related drawings.

The typical beam management operation in NR causes problems, such as increases in system overhead and power consumption of UEs as the numbers of beams and UEs increases. Further, for a UE in the initial cell connection stage, a delay in cell connection may occur because the UE selects the initial beam only after measuring all available beams,. To address this issue, it has been proposed to use the AI/ML model that predicts overall beam strength based on some beam measurements. However, detailed procedures or methods therefor have not yet been defined. The present disclosure aims to propose a more specific operation for model monitoring as part of effective AI/ML-based beam management.

Currently, discussions on AI/ML for beam management are underway, with agreement to explore spatial DL beam prediction (BM-Case 1) and temporal DL beam prediction (BM-Case 2) as sub use cases. This enables prediction of the beam strength for Set A based on the measurement of the beams in Set B. In the case of spatial DL beam prediction, as illustrated in FIG. 18, Set B may be configured as a subset of Set A. Alternatively, as illustrated in FIG. 19, Set B may be composed of wide beams, while Set A may be composed of narrow beams. For temporal DL beam prediction, in addition to the cases of FIGS. 18 and 19, a configuration where Set A and Set B are identical may also be considered. Temporal DL beam prediction involves forecasting future beam information based on past measurements. It may also leverage spatial DL beam prediction to first predict the entire beam set, which is then reused for temporal prediction. Accordingly, the spatial DL beam prediction cases shown in FIGS. 18 and 19 may serve as a basic beam prediction method.

In AI/ML-based beam prediction, the produce may vary depending on the location of the AI/ML model and which entity perform training/inference. The term "one-sided (AI/ML) model" and "two-sided (AI/ML) model" refers whether inference is performed solely by one node or jointly by the network (NW) and the UE. For AI/ML-based beam management (BM), only one-sided model is currently considered. The collaboration level may be determined based on the location of training, and the beam management (BM) may be implemented in one of the following four forms.
1. Perform AI/ML model training and inference on the network side.
2. Perform AI/ML model training and inference on the UE side.
3. Perform AI/ML model training on the network side and perform AI/ML model inference on the UE side.
4. perform AI/ML model training on the UE side and perform AI/ML model inference on the network side.

Cases 1 and 2 above do not require model transfer to the air interface since both training/inference operate in one node. However, it may be required to signal information necessary to operate the AI/ML model. This may correspond to the currently defined collaboration level y (transmission/reception of only signaling without model transfer). Cases 3 and 4 above require model transfer to the air interface since training and inference operate in different nodes. This may correspond to the currently defined collaboration level z.

Further, the beam management method using AI/ML is expected to reduce the burden of measuring the entire beam as well as reduce the overhead on RS by measuring some of all the beams, or other beams than all the beams to predict the signal strength for all the beams (Set A). However, if the prediction value of the beams for the predicted Set A is not accurate, the AI/ML method may lead to frequent beam failures or continuous disconnections by selecting inaccurate beams. To address these issues, the process of continuously monitoring the accuracy of the predicted beam is importance. It is necessary to compare the actual measurement value and prediction value of beams belonging to Set A to monitor the accuracy of the beam. However, it may increase the measurement burden of the UE to measure the beam of Set A whenever all of the of the beams for Set A are inferred.

The position where inference and training are performed may also affect the model monitoring method. In other words, the inference subject performs monitoring, and the result value should be transmitted to the training subject. This is because the model monitoring result may allow model update to be performed through new training. Further, even when training and inference are performed on one node, the results of model monitoring may trigger a new procedure as needed, so that it may be necessary to transfer feedback according to model performance to the base station or the UE.

The disclosure proposes a specific method for effective AI/ML model monitoring when beam management is performed using AI/ML based on the foregoing.

The present disclosure proposes defining Set C (e.g., a set of beams for AI/ML model monitoring) as a means to evaluate the accuracy of the result value (e.g., output of the inferred beams (Set A)) of the AI/ML model when performing a beam management procedure between the base station (NW) and the UE using the AI/ML model. Here, Set C is composed of one or more beams used for model monitoring purposes, which may be selected/defined as a sub set of Set A by a node performing model monitoring.

In the disclosure, Set A may be defined for downlink (DL) beam prediction, and Set B may be defined for DL beam measurement.

More specifically, the above proposed Set C may be composed of N beams (e.g., N (top-N) beams in order from the beam with the highest RSRP) selected by any algorithm (e.g., high RSRP) among the beams of Set A derived by the AI/ML model. The information about the beam constituting Set C may be determined by the UE or the base station according to the model inference position. When the UE performs model inference, Set C may be composed of beams belonging to top-N selected for reporting to the base station among the beams of Set A derived through model inference, and Set C may be dynamically configured between the UE and the base station whenever top-N is reported. At this time, the network (NW) may implicitly map the beams for top-N received from the UE to the RS resources allocated to the UE in advance for Sec C, so that the base station and the UE mutually recognize the configuration for Set C and perform resource mapping for measurement. The UE may determine the model accuracy by comparing the result value of the output for the set C inferred by the AI/ML model and the measurement value for the actual measured set C. When NW performs model inference, the beams of Set C may be composed of beams arbitrarily selected from among the beams of Set A derived by model inference at the base station, which may depend on the base station implementation.

Here, the base station may set at least two different CSI resource sets through the RRC message, allowing the UE to measure the signal strength of each of the beams constituting Set B and Set C. In other words, a 1^{st} CSI resource set mapped to at least the beams belonging to Set B and a 2^{nd} CSI resource set for Set C may be allocated for each UE. Here, the 2^{nd} CSI resource set for Set C may be configured to be transmitted in temporal association with the 1^{st} CSI resource set for Set B. More specifically, the 2^{nd} CSI resource set may be configured to be transmitted at a time (e.g., x slots after the reporting) associated with reporting for the 1^{st} CSI resource set.

Further, the signal strength of the beams measured through the 2^{nd} CSI resource set may be used to evaluate model performance based on comparison with inferred prediction values.

Hereinafter, an operation of the UE for performing model inference according to an embodiment is described. In addition to the CSI resource set for Set B for measuring the beam (set B) to be used as the input of the AI/ML model, the UE may additionally receive the RS resource information (CSI resource set for model monitoring/Set C) for the beam (Set C) to be used to evaluate the performance of the AI/ML model. In this case, after the beam measurement (Set B) for model inference, the UE may perform an additional beam measurement (Set C) for determining the accuracy of the corresponding inference in connection with the reporting time for Set B. The UE may determine the model accuracy by comparing the prediction value and the measurement value for Set C. For example, the report on the measurement result of the beam for Set C may transmit, to the base station, the performance evaluation result of the model (e.g., accuracy, model update, or reselection) or fallback indication (e.g., fallback to a beam management procedure that does not use the AI/ML model).
according to embodiments of the disclosure, the detailed procedure may be broadly categorized based on whether the model inference is performed at the network (gNB) or at the UE.

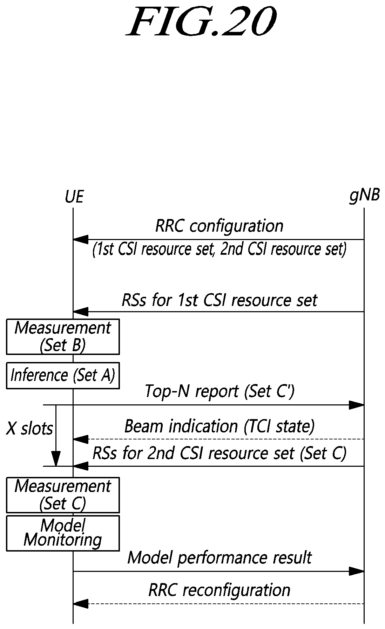

When the UE performs model inference, referring to FIG. 20, operations of the UE and the base station are as follows.

### (Operations of the UE)

1. The UE may receive an RRC configuration message including information about at least two CSI resource sets(s) from the base station.

The RRC configuration message may include configuration information about the first CSI resource set, the reporting method thereof, and the second CSI resource set and the reporting method thereof.

Here, the configuration information for the first CSI resource set may be configured in the same manner as in the related art.

According to the disclosure, a configuration method and a reporting method of the second CSI resource set associated with the first CSI resource set may be newly defined.

The temporal resource information about the second CSI resource set may be configured in association with the reporting time for the first CSI resource set.

Based on the number of RS resources (beams) in the second CSI resource set, the UE (e.g., after measuring the first CSI resource set) may infer the prediction value for Set A using the AI/ML model and identify N RS resources to be reported to the base station. For example, the temporal resource information of the second CSI resource set may include a value (e.g., x slots) relative to either the transmission time of the first CSI resource set or the CSI reporting time for Top-N inferred based on the first CSI resource set measurements. Here, N may mean Top-N corresponding to N measurement values in the order from the highest measurement value.

Unlike the typical reporting of beam measurement results, the reporting method for the second CSI resource set may include settings for request information corresponding to the model monitoring result value. For example, information related to model accuracy, model deactivation/change, or fallback identification may be reported.
2. The UE may measure the signal strength of the RS(s) transmitted in the first CSI resource set (Set B).
3. The UE may infer the prediction value for the entire beam Set A using the measured beam information Set B as an input value of the AI/ML model.
4. The UE may transmit a CSI report including information about the beam Set C belonging to Top-N among the prediction values derived by inference to the base station according to the setting of 1.
5. If necessary, the UE may receive information about a new serving beam from the base station. (Beam indication)
6. The UE measures the signal strength of the RS(s) for the 2^{nd} CSI resource set according to setting 1. The UE expects the corresponding RS to be sequentially/implicitly mapped and transmitted for the Top-N beams reported by the UE.
   Here, 'sequential/implicit' may mean mapping to the RIs corresponding to the RSs belonging to the 2^{nd} CSI resources set in a pre-agreed order, such as ascending order/descending order for beam id or resource indicator (RI) for Top-N, or ascending order/descending order for the reported prediction value (e.g., RSRP).
7. The UE may determine the accuracy of the model by comparing the measured signal strength of the beam mapped to the 2^{nd} CSI resource set with the value of Top-N, the prediction value derived by inference.
8. The UE may transmit the model performance evaluation result to the base station according to setting 1.

This report may be transmitted or omitted depending on the model monitoring result. Alternatively, the result may be reported every time, regardless of the monitoring outcome.

If the performance evaluation indicates low model accuracy, the UE may request/direct the base station to deactivate, replace, or fall back the AI/ML model and request a new CSI resource.

### (Operations of the base station)

1. The base station may transmit an RRC configuration message including information about at least two CSI resource sets(s) to the UE.

The RRC configuration message may include configuration information about the first CSI resource set, the reporting method thereof, and the second CSI resource set and the reporting method thereof.

Here, the configuration information for the first CSI resource set may be identical to that in the related art.

According to the disclosure, new methods for configuring and reporting the second CSI resource set associated with the first CSI resource set may be newly defined.

The temporal resource information of the second CSI resource set may be configured relative to the reporting time of the first CSI resource set.

The second CSI resource set may be configured to include N RS resources, corresponding to the number of beams reported to the base station by the UE. For example, the temporal resource information may indicate a value (e.g., x slots) relative to either the transmission time of the first CSI resource set or the CSI reporting time for Top-N inferred from measurements of the beams mapped to the first CSI resource set.

Unlike the typical reporting of beam measurement results, the reporting method for the second CSI resource set may include request information based on the model monitoring result. For example, the report may include information on model accuracy, model deactivation/change, or fallback identification.
2. The base station may transmit the RSs to which the beams for Set B are mapped according to setting 1 using the first CSI resource set.
3. The base station may receive a CSI report including information about the N beams (Set C) from the UE.
4. If necessary, the base station may select one beam and inform the UE of information about the selected beam. (beam indication)
5. The base station may sequentially/implicitly map the beams included in the CSI report received at 3 to the RS(s) for the 2^{nd} CSI resource set pre-allocated at 1 and transmit the same.

Here, 'sequential/implicit' means mapping to the RIs corresponding to the RSs belonging to the 2^{nd} CSI resources set in a pre-agreed order, such as ascending order/descending order for beam id or resource indicator (RI) for Top-N reported from the UE, or ascending order/descending order for the reported prediction value (e.g., RSRP).

6. The base station may receive model performance evaluation results from the UE.

This result from the UE may be received or omitted depending on the model monitoring result. Alternatively, the result may be reported every time, regardless of the monitoring outcome.

if performance evaluation indicates low model accuracy, the UE may request/direct the base station to deactivate, replace, or fall back the AI/ML model, so that the corresponding information may serve as a request for a new CSI resource configuration.

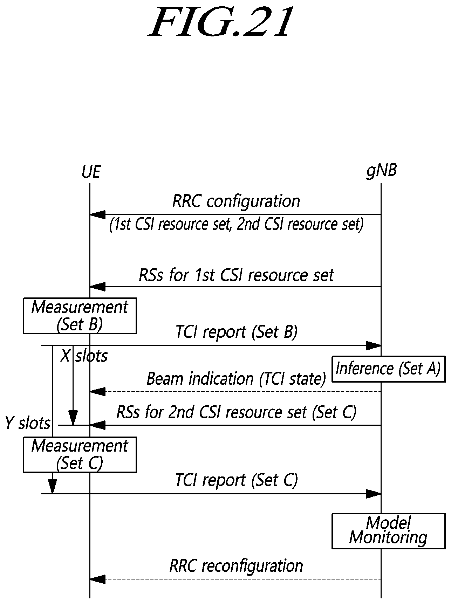

Referring to FIG. 21, when the base station/NW performs model inference, operations of the base station and the UE are as follows.

### (Operations of the base station)

1. The base station may transmit an RRC configuration message including information about at least two CSI resource set to the UE.

The RRC configuration message may include configuration information about the first CSI resource set, the reporting method thereof, and the second CSI resource set and the reporting method thereof.

Here, the configuration information for the first CSI resource set may be identical to that in the related art.

According to the disclosure, new methods for configuring and reporting the second CSI resource set in association with the first CSI resource set may be defined.

The temporal resource information for the second CSI resource set may be configured relative to the reporting time of the first CSI resource set. For example, the temporal resource information may indicate a value (e.g., x slots) relative to the transmission time of the first CSI resource set or the CSI reporting time for the result values for the measurement of the beams mapped to the first CSI resource set.

The reporting time information for the second CSI resource set may be configured relative to the reporting time of the first CSI resource set. For example, the temporal resource information may indicate a value (e.g., y slots) relative to the transmission time of the first CSI resource set or the CSI reporting time for the measurement results of beams mapped to the first CSI resource set.
2. The base station may transmit the RSs to which the beams for Set B are mapped according to setting 1 using the first CSI resource set.
3. The base station may receive a CSI report including measurement values for beam Set B mapped to the first CSI resource set from the UE.
4. The base station may infer the prediction value for the entire beam Set A using the beam information included in the CSI report received at 3 as an input value of the AI/ML model.
5. If necessary, the base station may select one best beam among the prediction values for the inferred beam (Set A) and inform the UE of information about the selected beam.
6. The base station may arbitrarily select N beams (Set C) not belonging to Set B out of Set A, map the same to the RS of the 2^{nd} CSI resource set and transmit it to the UE according to the settings.
7. The base station may receive the measurement result for Set C from the UE at the time according to setting 1.
8. The base station may compare the measurement result received at 7 with the prediction result value inferred at 5 and perform model monitoring.
9. The base station may indicate a new setting to the UE according to the model performance evaluation result.

This may be transmitted or omitted depending on the model monitoring result.

If the performance evaluation result indicates low model accuracy, the base station may indicate a new CSI resource configuration to the UE in response to deactivation, replacement, or fallback of the AI/ML model.

### (Operations of the UE)

1. The UE may receive an RRC configuration message including information about at least two CSI resource sets from the base station.

It may include configuration information about the first CSI resource set, the reporting method thereof, and the second CSI resource set and the reporting method thereof.

Here, the configuration information for the first CSI resource set may be identical to that in the prior art.

According to the disclosure, new methods for configuring and reporting the second CSI resource set in relation to the first CSI resource set may be defined.

The temporal resource information for the second CSI resource set may also be configured relative to the reporting time of the first CSI resource set. For example, the temporal resource information may indicate a value (e.g., x slots) relative to the transmission time of the first CSI resource set or the CSI reporting time for the result values for the measurement of the beams mapped to the first CSI resource set.

The reporting time information for the second CSI resource set may be configured relative to the reporting time of the first CSI resource set. For example, the temporal resource information indicate a value (e.g., y slots) relative to the transmission time of the first CSI resource set or the CSI reporting time for the measurement results of the beams mapped to the first CSI resource set.
2. The UE may measure the signal strength of the RSs to which the beams for Set B are mapped according to setting 1 using the first CSI resource set.
3. The UE may transmit/report, to the base station, a CSI report including measurement values for beam Set B mapped to the first CSI resource set.
4. If necessary, the UE may receive information about the selected beam from the base station. (beam indication)
5. The UE may measure the signal strength for the RS of the 2^{nd} CSI resource set (Set C) transmitted in association with the transmission time of 3 according to setting 1.
6. The UE may report/transmit the measurement result of 5 to the base station at the time according to setting 1.
7. According to the model performance evaluation result, the UE may receive a new setting from the base station.

This may be transmitted or omitted depending on the model monitoring result at the base station.

If the performance evaluation result indicates low model accuracy, the base station may instruct the UE with a new CSI resource configuration following AI/ML model deactivation, replacement, or fallback.

As previously described, when AI/ML based beam management is performed, low model accuracy may lead to degraded communication quality due to frequent beam switching and disconnections. To prevent frequent disconnections caused by incorrect beam predictions, continuous model monitoring during AI/ML model inference is required. However, the typical model monitoring compares predicted beam results derived from measurement of all candidate beams, which imnpoes significant measurement overhead during each inference. According to the disclosure, a new beam set, Set C, is implicitly defined to minimize configuration signaling for model monitoring, enabling the UE to assess model accuracy using a minimum number of beam measurements per inference. This approach reduces the burden of additional beam measurement and helps minimize disconnections from the cell through continuous model monitoring.

Hereinafter, hardware and software configurations of a UE and a base station which may perform all or some of the embodiments described above in connection with FIGS. 1 to 21 are described with reference to the drawings. The above description may be omitted for brevity, in such cases, the omitted content may be applied similarly to the following description, provided it does not conflict with the technical spirit of the invention.

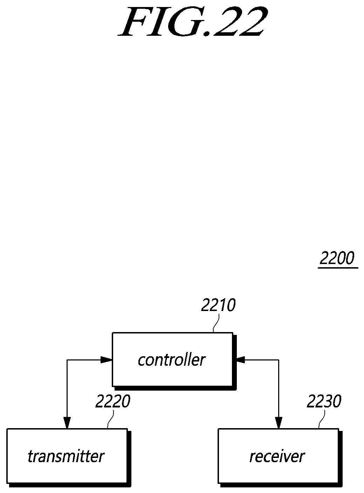

FIG. 22 is a block diagram illustrating a UE 2200 according to an embodiment.

Referring to FIG. 22, a UE 2200 according to an embodiment includes a transmitter 2220, a receiver 2230, and a controller 2210 controlling the transmitter and the receiver.

The controller 2210 controls the overall operation of the UE 2200 according to the model monitoring method in beam management using artificial intelligence and machine learning required to perform the above-described embodiments.

The transmitter 2220 and the receiver 2230 are used to transmit or receive signals or messages or data necessary for performing the above-described embodiments, with the base station.

The controller 2210 may receive second reference signal resource set configuration information about a reference signal (RS) for monitoring an AI/ML model in relation to the reference signal (RS) configured for a UE.

When a reference signal, such as a CSI-RS, is configured for the UE, an entire reference signal resource set (Set A) for the reference signal may be configured. In this case, the entire reference signal resource set (Set A) may refer to a group of reference signal resources configured for the UE using a legacy method. Further, each reference signal resource may correspond to an individual beam.

According to an embodiment, for the reference signals respectively transmittable in the reference signal resources in the entire reference signal resource set (Set A), the controller 2210 may obtain a prediction value inferred through the AI/ML model instead of the measurement value measured directly for signal strength or signal quality. In this case, the prediction value for the reference signals respectively transmittable in the reference signal resources included in the entire reference signal resource set may be inferred using, as an input, the measurement value of the reference signal measured based on first reference signal resource set (Set B) configuration information about the reference signal, configured based on the entire reference signal resource set.

To that end, the controller 2210 may further receive the first reference signal resource set configuration information in addition to the second reference signal resource set configuration information through higher layer signaling. The controller 2210 may measure signal strength or signal quality of the reference signal transmitted through the reference signal resource in the first reference signal resource set (Set B) based on the first reference signal resource set configuration information.

The controller 2210 may obtain a prediction value for reference signals respectively transmittable in the reference signal resources included in the entire reference signal resource set (Set A) using the measurement value of the reference signal measured based on the first reference signal resource set (Set B) configuration information as an input to the AI/ML model.

The controller 2210 may determine N reference signal resources (Top-N) in order from the reference signal resource where the highest prediction value is inferred among the reference signal resources included in the entire reference signal resource set (Set A). Here, N may be preset to a natural number. However, this is merely an example, and a method ofor determining N reference signal resources may be configured differently as needed.

If the controller 2210 reports N reference signal resources (Top-N), the base station may determine an optimal beam to be used in subsequent communication with the UE by referring to the reported information. The base station may perform data transmission/reception with the UE using the determined beam.

In this case, the second reference signal resource set (Set C) configuration information may be configured to monitor the AI/ML model used to infer the prediction value for the entire reference signal resource set (Set A). According to an embodiment, the second reference signal resource set configuration information may be configured based on at least one reference signal resource selected according to a prediction value inferred through the AI/ML model for reference signals respectively transmittable in the reference signal resources included in the entire reference signal resource set.

According to an embodiment, if the above-described N reference signal resources (Top-N) are selected, the second reference signal resource set (Set C) may be composed of N reference signal resources. In other words, the beams corresponding to the second reference signal resource set (Set C) may be composed of beams belonging to top-N reported to the base station among the beams of the entire reference signal resource set (Set A). The base station may implicitly map the beams for top-N received from the UE to the reference signal resource previously allocated to the UE through the second reference signal resource set (Set C) configuration information.

Thus, the second reference signal resource set configuration information may be configured whenever at least one reference signal resource selected according to the prediction value for reference signals respectively transmittable in the reference signal resources included in the entire reference signal resource set is reported. In other words, a second reference signal resource set (Set C) may be dynamically configured between the UE and the base station whenever reporting for Top-N is performed.

Further, in the second reference signal resource set configuration information, time domain resource information may be configured with respect to the time of reporting at least one reference signal resource selected according to the prediction value for reference signals respectively transmittable in the reference signal resources included in the entire reference signal resource set or the transmission time of the first reference signal resource set.

In other words, the base station may allocate at least the first reference signal resource set (Set B) and the second reference signal resource set (Set C) for each UE, and configure the second reference signal resource set (Set C) to be transmitted in temporal association with the first reference signal resource set (Set B). For example, the second reference signal resource set (Set C) may be configured to be transmitted, x slots from the CSI reporting time for Top-N inferred based on the measurement value of the first reference signal resource set (Set B). Alternatively, the second reference signal resource set (Set C) may be configured to be transmitted, y slots after the transmission time of the reference signals through the first reference signal resource set (Set B).

The controller 2210 may measure a signal strength or signal quality for the reference signal based on the second reference signal resource configuration information. Further, the controller 2210 may compare the measurement value of the reference signal with the prediction value of the reference signal inferred through the AI/ML model and report the performance result of the AI/ML model.

The controller 2210 may measure the signal strength or signal quality of the reference signal transmitted through the second reference signal resource set based on the second reference signal resource set (Set C) configuration information. In this case, the controller 2210 may expect the corresponding reference signal to be sequentially/implicitly mapped and transmitted for the beam of the Top-N reported by the UE.

The controller 2210 may determine the accuracy of the model by comparing the measurement value of the reference signal with the prediction value of the reference signal inferred through the AI/ML model. In other words, the controller 2210 may determine the accuracy of the model by comparing the measurement value for each beam mapped to the second reference signal resource set (Set C) with the prediction value for each beam corresponding to Top-N derived by the AI/ML model.

The controller 2210 may report a performance evaluation result such as accuracy, update, or reselection of the AI/ML model to the base station. When the model accuracy is low according to the performance evaluation result, the controller 2210 may request a new CSI resource setting by requesting/instructing the base station to deactivate, replace, or fall back the AI/ML model.

According to an embodiment, the report of the performance evaluation result may be transmitted or omitted according to the model monitoring result. For example, when the accuracy of the model meets or exceeds a predetermined value as a result of performance evaluation, the reporting may be omitted. Alternatively, the reporting of the performance evaluation result may be configured to be performed every time regardless of the model monitoring result.

According to the embodiments described above, a model may be monitored in beam management using artificial intelligence and machine learning. Further, the AI/ML model monitoring method and device according to the embodiments may minimize disconnections from a cell through continuous model monitoring and reduce the burden of additional beam management in AI/ML model monitoring.

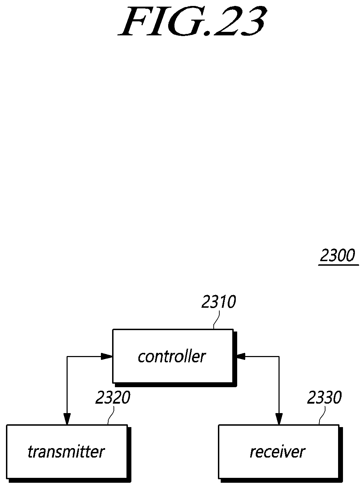

FIG. 23 is a block diagram illustrating a base station 2300 according to an embodiment.

Referring to FIG. 23, a base station 2300 according to an embodiment includes a transmitter 2320, a receiver 2330, and a controller 2310 controlling the transmitter and the receiver.

The controller 2310 controls the overall operation of the UE 2300 and the overall operation of the repeater according to the model monitoring method in beam management using artificial intelligence and machine learning required to perform the above-described embodiments.

The transmitter 2320 and the receiver 2330 are used to transmit or receive signals or messages or data necessary for performing the above-described embodiments, with the UE.

The controller 2310 may transmit second reference signal resource set configuration information about a reference signal (RS) for monitoring an AI/ML model in relation to the reference signal (RS) configured for a UE.

When a reference signal, such as a CSI-RS, is configured for the UE, an entire reference signal resource set (Set A) for the reference signal may be configured. In this case, the entire reference signal resource set (Set A) may refer to a group of reference signal resources that may be configured for the UE using a legacy method. Further, each reference signal resource may be configured to correspond to a respective beam.

According to an embodiment, for the reference signals respectively transmittable in the reference signal resources in the entire reference signal resource set (Set A), the UE may obtain a prediction value inferred through the AI/ML model instead of the measurement value measured directly for signal strength or signal quality. In this case, the prediction value for the reference signals respectively transmittable in the reference signal resources included in the entire reference signal resource set may be inferred using, as an input, the measurement value of the reference signal measured based on first reference signal resource set (Set B) configuration information about the reference signal, configured based on the entire reference signal resource set.

To that end, the controller 2310 may further transmit the first reference signal resource set configuration information in addition to the second reference signal resource set configuration information through higher layer signaling. The UE may measure signal strength or signal quality of the reference signal transmitted through the reference signal resource in the first reference signal resource set (Set B) based on the first reference signal resource set configuration information.

The UE may obtain a prediction value for reference signals respectively transmittable in the reference signal resources included in the entire reference signal resource set (Set A) using the measurement value of the reference signal measured based on the first reference signal resource set (Set B) configuration information as an input to the AI/ML model.

The UE may determine N reference signal resources (Top-N) in order from the reference signal resources from which the highest prediction value is inferred among the reference signal resources included in the entire reference signal resource set (Set A). Here, N may be preset to a natural number. However, the is an example, and a method of determining N reference signal resources may be set differently as necessary.

If the UE reports N reference signal resources (Top-N), the controller 2310 may determine an optimal beam to be used in subsequent communication with the UE by referring to the reported information. The controller 2310 may perform data transmission/reception with the UE using the determined beam.

In this case, the second reference signal resource set (Set C) configuration information may be configured to monitor the AI/ML model used to infer the prediction value for the entire reference signal resource set (Set A). According to an embodiment, the second reference signal resource set configuration information may be configured based on at least one reference signal resource selected based on a prediction value inferred through the AI/ML model for reference signals respectively transmittable in the reference signal resources included in the entire reference signal resource set.

According to an embodiment, if the above-described N reference signal resources (Top-N) are selected, the second reference signal resource set (Set C) may be composed of N reference signal resources. In other words, the beams corresponding to the second reference signal resource set (Set C) may be composed of beams belonging to top-N reported to the base station among the beams of the entire reference signal resource set (Set A). The controller 2310 may implicitly map the beams for top-N received from the UE to the reference signal resource previously allocated to the UE through the second reference signal resource set (Set C) configuration information.

Thus, the second reference signal resource set configuration information may be configured whenever at least one reference signal resource selected according to the prediction value for reference signals respectively transmittable in the reference signal resources included in the entire reference signal resource set is reported. In other words, a second reference signal resource set (Set C) may be dynamically configured between the UE and the base station whenever reporting for Top-N is performed.

Further, the second reference signal resource set configuration information may include time domain resource information that is configured related to the reporting time of at least one reference signal resource selected based on the prediction value for reference signals for the reference signal resources in the entire reference signal resource set or based on the transmission time of the first reference signal resource set.

In other words, the controller 2310 may allocate at least the first reference signal resource set (Set B) and the second reference signal resource set (Set C) for each UE, and configure the second reference signal resource set (Set C) to be transmitted in temporal association with the first reference signal resource set (Set B). For example, the second reference signal resource set (Set C) may be configured to be transmitted, x slots from the CSI reporting time for Top-N inferred based on the measurement value of the first reference signal resource set (Set B). Alternatively, the second reference signal resource set (Set C) may be configured to be transmitted, y slots after the transmission time of the reference signals through the first reference signal resource set (Set B).

The controller 2310 may transmit a reference signal based on the second reference signal resource set configuration information and receive the performance result of the AI/ML model obtained by comparing the measurement value of the reference signal with the prediction value of the reference signal inferred through the AI/ML model.

The UE may measure the signal strength or signal quality of the reference signal transmitted through the second reference signal resource set based on the second reference signal resource set (Set C) configuration information. In this case, the UE may expect the corresponding reference signal to be sequentially/implicitly mapped and transmitted for the beam of the Top-N reported by the UE. In other words, the controller 2310 may map the RIs corresponding to the reference signal resources belonging to the second reference signal resource set (Set C) in a predetermined order, such as in ascending/descending order of beam id for the reported Top-N or resource indicator (RI), or ascending order/descending order for the reported prediction value.

The UE may determine the accuracy of the model by comparing the measurement value of the reference signal with the prediction value of the reference signal inferred through the AI/ML model. In other words, the UE may determine the accuracy of the model by comparing the measurement value for each beam mapped to the second reference signal resource set (Set C) with the prediction value for each beam corresponding to Top-N derived by the AI/ML model.

The controller 2310 may receive, from the UE, a performance evaluation result such as accuracy, update, or reselection of the AI/ML model. When the model accuracy is low according to the performance evaluation result, the controller 2310 may receive, from the UE, a request for a new CSI resource setting by requesting/instructing the base station to deactivate, replace, or fall back the AI/ML model.

According to an embodiment, the report of the performance evaluation result may be transmitted or omitted according to the model monitoring result. For example, when the accuracy of the model meets or exceeds a predetermined value as a result of performance evaluation, the reporting may be omitted. Alternatively, the reporting of the performance evaluation result may be configured to be performed every time regardless of the model monitoring result.

According to the embodiments described above, a model may be monitored in beam management using artificial intelligence and machine learning. Further, the AI/ML model monitoring method and device according to the embodiments may minimize disconnections from a cell through continuous model monitoring and reduce the burden of additional beam management in AI/ML model monitoring.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the present disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the present disclosure shall be construed on the basis of the accompanying claims in such a manner that all of the technical ideas included within the scope equivalent to the claims belong to the present disclosure.

### CROSS-REFERENCE TO RELATED APPLICATION

This application claims priority under 35 U.S.C. 119(a) in the United States and other countries to Korean Patent Application Nos. 10-2022-0129855, filed on October 11, 2022, and 10-2023-0134641, filed on October 10, 2023, in the Korean Intellectual Property Office, the disclosures of which are incorporated by reference herein in their entireties.

## Claims

1. A method for a user equipment (UE) to perform model monitoring in beam management using artificial intelligence and machine learning (AI/ML), the method comprising:
receiving second reference signal resource set configuration information about a reference signal (RS) for monitoring an AI/ML model, in relation to the reference signal (RS) configured for the UE;
measuring a signal strength or signal quality for the reference signal based on the second reference signal resource configuration information; and
comparing a measurement value of the reference signal with a prediction value of the reference signal inferred by the AI/ML model, and reporting a performance result of the AI/ML model.

2. The method of claim 1, wherein the second reference signal resource set configuration information is configured based on at least one reference signal resource selected according to the prediction value inferred by the AI/ML model for reference signals transmittable via reference signal resources included in an entire reference signal resource set of the reference signal.

3. The method of claim 2, wherein the prediction value for the reference signals transmittable via the reference signal resources included in the entire reference signal resource set is inferred using, as an input, the measurement value of the reference signal measured based on first reference signal resource set configuration information about the reference signal, configured based on the entire reference signal resource set.

4. The method of claim 3, wherein the second reference signal resource set configuration information includes time domain resource information configured with respect to a transmission time of the first reference signal resource set or a time of reporting at least one reference signal resource selected based on the prediction value for the reference signals respectively transmittable via the reference signal resources included in the entire reference signal resource set.

5. The method of claim 2, wherein the second reference signal resource set configuration information is configured each time of reporting at least one reference signal resource selected according to the prediction value for reference signals respectively transmittable via reference signal resources included in an entire reference signal resource set.

6. A method for a base station to perform model monitoring in beam management using artificial intelligence and machine learning, the method comprising:
transmitting second reference signal resource set configuration information about a reference signal (RS) for monitoring an AI/ML model in relation to the reference signal (RS) configured for a UE;
transmitting the reference signal based on the second reference signal resource configuration information; and
receiving a performance result of the AI/ML model obtained by comparing a measurement value of the reference signal with a prediction value of the reference signal inferred by the AI/ML model.

7. The method of claim 6, wherein the second reference signal resource set configuration information is configured based on at least one reference signal resource selected according to the prediction value inferred by the AI/ML model for reference signals respectively transmittable via reference signal resources included in an entire reference signal resource set of the reference signal.

8. The method of claim 7, wherein the prediction value for the reference signals respectively transmittable via the reference signal resources included in the entire reference signal resource set is inferred using, as an input, the measurement value of the reference signal measured based on first reference signal resource set configuration information about the reference signal, configured based on the entire reference signal resource set.

9. The method of claim 8, wherein the second reference signal resource set configuration information include time domain resource information configured with respect to a transmission time of the first reference signal resource set or a time of reporting at least one reference signal resource selected according to the prediction value for the reference signals respectively transmittable via the reference signal resources included in the entire reference signal resource set.

10. The method of claim 7, wherein the second reference signal resource set configuration information is configured each time of reporting at least one reference signal resource selected according to the prediction value for reference signals respectively transmittable via reference signal resources included in an entire reference signal resource set.

11. A user equipment (UE) performing model monitoring in beam management using artificial intelligence and machine learning (AI/ML), comprising:
a transmitter;
a receiver; and
a controller configured to control an operation of the transmitter and the receiver, wherein the controller:
receives second reference signal resource set configuration information about a reference signal (RS) for monitoring an AI/ML model in relation to the reference signal (RS) configured for the UE;
measures a signal strength or signal quality for the reference signal based on the second reference signal resource configuration information; and
compares a measurement value of the reference signal with a prediction value of the reference signal inferred by the AI/ML model to report a performance result of the AI/ML model.

12. The UE of claim 11, wherein the second reference signal resource set configuration information is configured based on at least one reference signal resource selected according to the prediction value inferred by the AI/ML model for reference signals respectively transmittable via reference signal resources included in an entire reference signal resource set of the reference signal.

13. The UE of claim 12, wherein the prediction value for the reference signals respectively transmittable via the reference signal resources included in the entire reference signal resource set is inferred using, as an input, the measurement value of the reference signal measured based on first reference signal resource set configuration information about the reference signal, configured based on the entire reference signal resource set.

14. The UE of claim 13, wherein the second reference signal resource set configuration information includes time domain resource information configured with respect to a transmission time of the first reference signal resource set or a time of reporting at least one reference signal resource selected according to the prediction value for the reference signals respectively transmittable via the reference signal resources included in the entire reference signal resource set.

15. The UE of claim 12, wherein the second reference signal resource set configuration information is configured each time of reporting at least one reference signal resource selected according to the prediction value for reference signals respectively transmittable via reference signal resources included in an entire reference signal resource set.
